# EUROPEAN PATENT SPECIFICATION

(11) **EP 3 111 140 B1**
(45) Date of publication and mention of the grant of the patent: **12.02.2020**
(21) Application number: 15708860.0
(22) Date of filing: 26.02.2015
(51) Int. Cl.: F23G 5/40, F23G 5/44

(54) **WASTE TREATMENT INSTALLATION AND METHOD**
ABFALLBEHANDLUNGSANLAGE UND VERFAHREN
INSTALLATION DE TRAITEMENT DE DÉCHETS ET PROCÉDÉ

(30) Priority: 28.02.2014 FI 20145202
(43) Date of publication of application: 04.01.2017
(73) Proprietor: Evac Oy, 02630 Espoo (FI)
(72) Inventor: JOKELA, Jari, FI-02630 Espoo (FI); YLIMÄKI, Jussi, FI-02630 Espoo (FI); KARJALAINEN, Mika, FI-02630 Espoo (FI)
(74) Representative: Berggren Oy, Helsinki & Oulu
(86) International application number: PCT/FI2015/050116
(87) International publication number: WO 2015/128547

(56) References cited:
- EP-A2- 1 473 533
- DE-A1- 3 325 078
- GB-A- 2 018 963
- US-A- 4 996 930

## Description

### Technical Field

The invention relates to a marine vessel waste treatment installation, which installation is intended for treatment of dry waste and wet waste, and which installation comprises at least one waste receiving unit including a first waste receiving unit for dry waste and a second waste receiving unit for wet waste, at least one waste transport means, and at least one incinerator unit provided with an inlet, according to the preamble of claim 1. The invention also relates to a method for treating waste according to the preamble of claim 8.

### Background art

Various waste treatment installations are known from prior art. Typical waste treatment installations, particularly for treating wet waste such as food waste, include a waste feeding hopper, from which wet waste is fed onto transport screw leading into an incinerator furnace. In order to be able to burn the wet waste, the wet waste firstly has to be dried to a sufficient degree. Drying is achieved by having the transport screw arranged at least partly inside the incinerator furnace so that the wet waste may be dried, often in multiple stages, as it is forwarded along the transport screw. The dried wet waste is then fed onto e.g. a fluidized bed for final burning.

Such waste treatment installations are known e.g. from EP 1 384 948, JP 60152810, JP S57117722 A, JP 2000257829 and JP 9318031.

In another known solution disclosed in JP 56025608 wet waste is fed by a screw conveyor onto a receiving surface of a first chamber where the waste is rotated and dried, whereby the dried waste is subsequently fed into a second chamber for burning.

DE 33 25 078 A1 discloses a waste burning arrangement arranged on board a ship. In this known arrangement wet waste and dry waste are fed onto a feeder for mixing the waste before the mixed waste is fed to an incinerator.

US 4,996,930 discloses a system for incinerating hazardous contaminated soil in an incinerator operated below atmospheric pressure. The system comprises a feeder with twin screws for forming a plug of the collected hazardous contaminated soil between a soil collecting conveyor operated under atmospheric pressure and the incinerator operated below atmospheric pressure in order to prevent contamination escaping the incinerator.

The known solutions for waste treatment require separate steps for firstly drying the waste and subsequently burning the waste. The installations are complex and have high energy consumption. In addition, the known installations are relatively large and thus require much space.

### Summary of invention

An object of the invention is to overcome the drawbacks of prior art and to achieve an efficient waste treatment installation. These objects are attained by means of a waste treatment installation according to claim 1 and a method for treating waste according to claim 8.

The basic idea of the invention is to provide an online mixing and a simultaneous treatment of dry waste and wet waste before incineration in order to provide an average moisture content of the waste mixture at a level of about 50% or below for ensuring a complete burning of the waste mixture.

This is achieved by having a marine vessel waste treatment installation provided with a separate first waste receiving unit for dry waste and a separate second waste receiving unit for wet waste, and by feeding both dry waste and wet waste into a waste transport means including dual waste-feeding screws, which forward and mix the dry waste and the wet waste before it is fed into an incinerator unit for burning of the waste mixture. In this way dry waste and wet waste may be kept separately before mixing them into a suitable degree for burning without further measures. In the incinerator unit the mixed dry waste and wet waste is fed onto a moving grate.

Such a waste treatment installation is particularly advantageous being installed and used on board a marine vessel since it requires little space and can handle both dry waste and wet waste efficiently without needs for separate storing of waste.

Also, the high calorific value of the dry waste is retained, because the mixing of dry waste and wet waste is done immediately before feeding of the waste mixture into the incinerator. This prevents the absorption of moisture from the wet waste to the dry waste. In this way, the dry waste will burn adjacent to the wet waste particles and speed up the moisture evaporation from the wet waste particles.

Further advantageous features of the waste treatment installation are given in claims 2-7 and further advantageous features of the method for treating waste are given in claims 9-11.

### Brief description of drawings

In the following the invention will be described, by way of example only, with reference to the accompanying schematic drawings, in which
Figure 1 shows a schematic outline of a waste treatment installation according to the invention,
Figure 2 shows the waste transport means in more detail, and
Figure 3 shows the moving grate in more detail.

### Detailed description

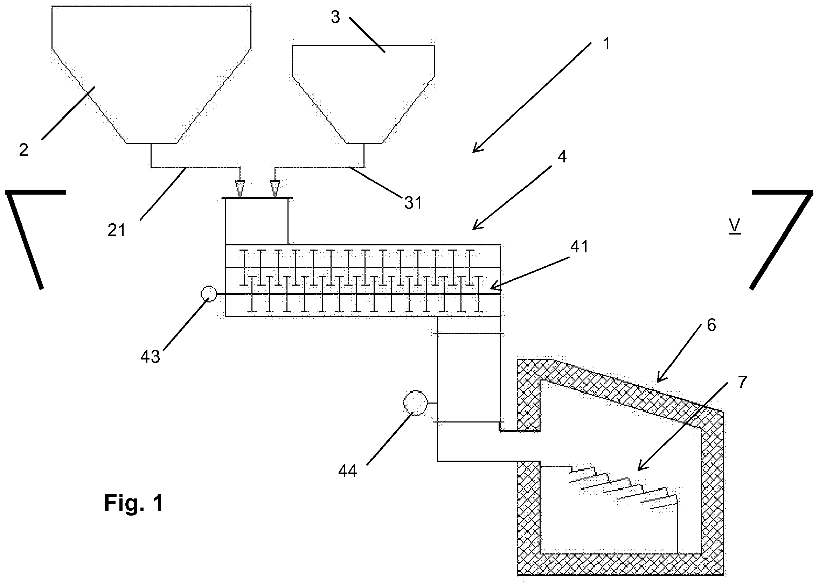

In Figure 1 a waste treatment installation is indicated by reference numeral 1. The waste treatment installation 1 is installed on board a marine vessel indicated by reference V. The main components of the waste treatment installation 1 include a first waste receiving unit 2, a so-called dry waste silo for receiving dry waste, and a second waste receiving unit 3, a so-called wet waste silo for receiving wet waste. Further, the waste treatment installation 1 includes a waste transport means 4 and an incinerator unit 6 provided with a moving grate 7.

Typically dry waste according to IMO standards would be composed of 40% of cardboard, 30 % of other packaging and paper, 20% of fibers and 10% of plastics. Typically wet waste would be composed of food waste and sludge with a maximum moisture content of 80%.

Dry waste from the first waste receiving unit 2 is fed by means of a dry waste chute 21 to the waste transport means 4. Wet waste from the second waste receiving unit 3 is fed to the waste transport means 4 by means of a wet waste chute 31. The dry waste and the wet waste are thus fed separately onto the waste transport means 4 respectively through the dry waste chute 21 and the wet waste chute 31. The waste transport means 4 includes dual waste-feeding screws 41, which are arranged in parallel in a dual screw formation. Feeding is in general arranged to be continuous and simultaneous in order to achieve an online mixing of dry waste and wet waste as the waste transport means 4 feeds the mixed dry waste and wet waste into the incinerator unit 6 through an inlet 61 of the incinerator unit 6 and onto the moving grate 7. The treatment of wet waste and dry waste is simultaneous in the waste treatment installation 1.

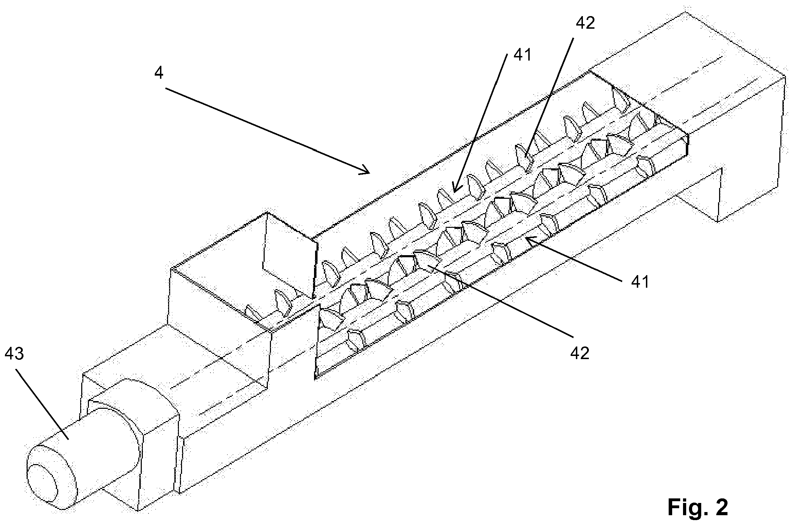

The dual waste-feeding screws 41 are shown more in detail in Figure 2. In addition to having a screw-type configuration that transports the received dry waste and wet waste forward, the dual waste-feeding screws 41 have a particular configuration. The dual waste-feeding screws 41 are provided with paddles 42 that effectively provide for mixing the two waste flows, i.e. the flow of dry waste from the dry waste chute 21 and the flow of wet waste from the wet waste chute 31.

The waste transport means 4, i.e. the dual waste-feeding screws 41, are driven by a drive unit 43, e.g. a variable-speed electric drive. A sensor 44 for monitoring the moisture content of the waste mixture is arranged in connection with the waste transport means 4. The sensor 44 is advantageously connected to a control mechanism, which in turn controls the feeding of the waste from the first waste receiving unit 2 and the second waste receiving unit 3. The purpose is to maintain an average moisture content of the waste mixture composed of dry waste and wet waste at a level of about 50% or below in order to ensure that the waste mixture burns efficiently in the incineration unit 6. A typical composition of the dry waste and wet waste is discussed above.

In case the desired moisture content, i.e. a level of about 50% or below, of the waste mixture is not achieved or in case the waste mixture does not burn efficiently in the incinerator unit 6, additional dry waste can be fed to the inlet 61 of the incinerator unit 6 by way of an auxiliary dry waste chute (not shown) so that the waste mixture is supplemented by dry waste in order to burn as appropriate.

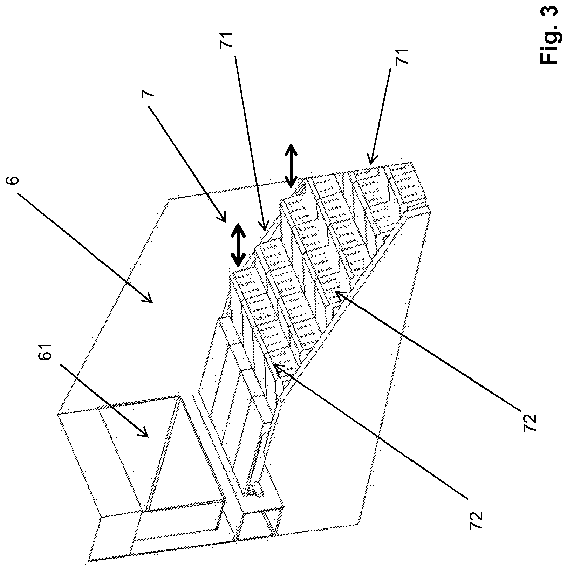

Figure 3 shows the incinerator unit 6 more in detail. As discussed above the dual waste-feeding screws 41 feed the mixed dry waste and wet waste into the incinerator unit 6 through the inlet 61 of the incinerator unit 6. The waste mixture is fed onto a moving grate 7. The moving grate 7 has a step-like configuration with a certain number grate elements 71 in the form of steps. The grate elements are placed in descending rows forming an inclined staircase structure with a longitudinal direction.

In order to impart a forwarding movement by means of the moving grate 7, a given number of the grate elements 71, preferable each other grate element, are movable back and forth (indicated by a double-headed arrow in Figure 3) in a longitudinal direction of the grate elements and the moving grate. In practice this means that these moving grate elements are retracted, whereby the mixed waste falls down on the next grate elements, and then pushed forward pushing the waste mixture (on said next grate element) forward onto the following step, i.e. the following grate element 71. This action then continues along the length of the moving grate 7 in a longitudinal direction from the inlet 61 towards the end of the moving grate.

In order to make burning of the mixed dry waste and wet waste yet more efficient in the incinerator unit 6, a given number of the grate elements 71 are provided with means for blowing air into the accumulated mixed waste in a longitudinal direction of the grate elements 71. In this embodiment, said means comprise air nozzles 72 in the front edge of the grate elements 71, i.e. in the forwarding direction of the moving grate 7. It is considered known to a person skilled in the art how to provide a suitable source of air and how to blow the air through the nozzles 72 into the moving mixed waste. Flue gas resulting from burning of the waste mixture is the led out of the incinerator (not shown).

The drawings and the description related thereto are only intended for clarification of the basic idea of the invention. The invention may vary in detail within the scope of the ensuing claims.

## Claims

1. Marine vessel waste treatment installation, which installation (1) is intended for treatment of dry waste and wet waste, and which installation comprises at least one waste receiving unit (2,3) including a first waste receiving unit (2) for dry waste and a second waste receiving unit (3) for wet waste, at least one waste transport means (4), and at least one incinerator unit (6) provided with an inlet (61), **characterized in that** the at least one waste transport means (4) includes dual waste-feeding screws (41) arranged to receive dry waste from the first waste receiving unit (2) by means of a dry waste chute (21) and wet waste from the second waste receiving unit (3) by means of a wet waste chute (31), the dual waste-feeding screws (41) being configured to mix the dry waste and the wet waste, and **in that** the dual waste-feeding screws (41) are connected to the inlet (61) of the incinerator unit (6) in order to feed the mixed dry waste and wet waste into the inlet (61) of the incinerator unit (6) and **in that** the incinerator unit (6) comprises a moving grate (7) arranged inside the incinerator unit (6), after the inlet (61) of the incinerator unit (6) and downstream of the dual waste-feeding screws (41).

2. Waste treatment installation according to claim 1, **characterized in that** the waste transport means (4) is provided with a drive unit (43).

3. Waste treatment installation according to claim 1 or 2, **characterized in that** the dual waste-feeding screws (41) of the waste transport means (4) are provided with paddles (42).

4. Waste treatment installation according to claim 1, **characterized in that** the moving grate (7) has a step-like configuration including a number of grate elements (71).

5. Waste treatment installation according to claim 4, **characterized in that** a given number of the grate elements (71) of the moving grate (7) are movable back and forth in a longitudinal direction of the moving grate (7).

6. Waste treatment installation according to claim 4 or 5, **characterized in that** a given number of the grate elements (71) of the moving grate (70) are provided with means for blowing air in a longitudinal direction of the moving grate (7).

7. Waste treatment installation according to claim 6, **characterized in that** the means for blowing air are in the form of nozzles (72).

8. Method for treating waste in a marine vessel waste treatment installation, in which method dry waste is collected in a first waste receiving unit (2) for dry waste and wet waste is collected in a second waste receiving unit (3) for wet waste, after which waste is fed by means of at least one waste transport means (4) into at least one incinerator unit (6) provided with an inlet (61), wherein dry waste from the first waste receiving unit (2) is fed by means of a dry waste chute (21) and wet waste from the second waste receiving unit (3) is fed by means of a wet waste chute (31) onto the waste transport means (4), **characterized in that** the waste transport means includes dual waste-feeding screws (41), in which method dry waste and wet waste are mixed by means of the dual waste-feeding screws (41) in order to feed mixed dry waste and wet waste into the inlet (61) of the incinerator unit (6) by means of the dual waste feeding screws (41), and **in that** in the incinerator (6) unit the mixed dry waste and wet waste is fed onto a moving grate (7).

9. Method according to claim 8, **characterized in that** the mixed dry waste and wet waste is forwarded along the moving grate (7) by a forwarding movement of the moving grate (7).

10. Method according to claim 9, **characterized in that** the moving grate (7) is provided with at step-like configuration including a number grate elements (71), and **in that** forwarding movement of the moving grate is achieved by setting a given number of the grate elements (71) in a back and forth movement in a longitudinal direction of the moving grate (7).

11. Method according to claim 9 or 10, **characterized in that** the moving grate (7) is provided with at step-like configuration including a number of grate elements (71), and **in that** air is blown into the mixed waste from a given number of the grate elements (71) in a longitudinal direction of the moving grate (7).

## Patentansprüche

1. Wasserfahrzeug-Abfallbehandlungsanlage, wobei die Anlage (1) zur Behandlung von Trockenabfällen und Nassabfällen vorgesehen ist, und wobei die Anlage mindestens eine Abfallannahmeeinheit (2, 3) mit einer ersten Abfallannahmeeinheit (2) für Trockenabfälle und einer zweiten Abfallannahmeeinheit (3) für Nassabfälle, mindestens ein Abfallbeförderungsmittel (4) und mindestens eine Verbrennungseinheit (6), die mit einem Eingang (61) versehen ist, umfasst, **dadurch gekennzeichnet, dass** das mindestens eine Abfallbeförderungsmittel (4) duale Abfallzuführschnecken (41) beinhaltet, die dafür ausgelegt sind, Trockenabfälle aus der ersten Abfallannahmeeinheit (2) mittels einer Trockenabfallrutsche (21) und Nassabfälle aus der zweiten Abfallannahmeeinheit (3) mittels einer Nassabfallrutsche (31) zu erhalten, wobei die dualen Abfallzuführschnecken (41) dafür konfiguriert sind, die Trockenabfälle und die Nassabfälle zu mischen, und dadurch, dass die dualen Abfallzuführschnecken (41) mit dem Eingang (61) der Verbrennungseinheit (6) verbunden sind, um die gemischten Trockenabfälle und Nassabfälle in den Eingang (61) der Verbrennungseinheit (6) einzuleiten, und dadurch, dass die Verbrennungseinheit (6) ein bewegliches Gitter (7) umfasst, das im Inneren der Verbrennungseinheit (6), hinter dem Eingang (61) der Verbrennungseinheit (6) und den dualen Abfallzuführschnecken (41) nachgelagert angeordnet ist.

2. Abfallbehandlungsanlage nach Anspruch 1, **dadurch gekennzeichnet, dass** das Abfallbeförderungsmittel (4) mit einer Antriebseinheit (43) versehen ist.

3. Abfallbehandlungsanlage nach Anspruch 1 oder 2, **dadurch gekennzeichnet, dass** die dualen Abfallzuführschnecken (41) der Abfallbeförderungsmittel (4) mit Schaufeln (42) versehen sind.

4. Abfallbehandlungsanlage nach Anspruch 1, **dadurch gekennzeichnet, dass** das bewegliche Gitter (7) eine stufenartige Konfiguration aufweist, die eine Anzahl von Gitterelementen (71) beinhaltet.

5. Abfallbehandlungsanlage nach Anspruch 4, **dadurch gekennzeichnet, dass** eine bestimmte Anzahl der Gitterelemente (71) des beweglichen Gitters (7) in einer Längsrichtung des beweglichen Gitters (7) vor- und zurückbewegbar sind.

6. Abfallbehandlungsanlage nach Anspruch 4 oder 5, **dadurch gekennzeichnet, dass** eine bestimmte Anzahl der Gitterelemente (71) des beweglichen Gitters (70) mit Mitteln zum Einblasen von Luft in einer Längsrichtung des beweglichen Gitters (7) bereitgestellt sind.

7. Abfallbehandlungsanlage nach Anspruch 6, **dadurch gekennzeichnet, dass** die Mittel zum Einblasen von Luft in Form von Düsen (72) vorliegen.

8. Verfahren zur Behandlung von Abfällen in einer Wasserfahrzeug-Abfallbehandlungsanlage, wobei während des Verfahrens Trockenabfälle in einer ersten Abfallannahmeeinheit (2) für Trockenabfälle gesammelt werden und Nassabfälle in einer zweiten Abfallannahmeeinheit (3) für Nassabfälle gesammelt werden, wonach Abfälle mittels mindestens eines Abfallbeförderungsmittels (4) mindestens einer Verbrennungseinheit (6), die mit einem Eingang (61) versehen ist, zugeführt werden, wobei dem Abfallbeförderungsmittel (4) Trockenabfälle aus der ersten Abfallannahmeeinheit (2) mittels einer Trockenabfallrutsche (21) zugeführt werden und Nassabfälle aus der zweiten Abfallannahmeeinheit (3) mittels einer Nassabfallrutsche (31) zugeführt werden, **dadurch gekennzeichnet, dass** die Abfallbeförderungsmittel duale Abfallzuführschnecken (41) beinhalten, wobei Trockenabfälle und Nassabfälle während des Verfahrens mittels der dualen Abfallzuführschnecken (41) gemischt werden, um dem Eingang (61) der Verbrennungseinheit (6) gemischte Trockenabfälle und Nassabfälle mittels der dualen Abfallzuführschnecken (41) zuzuführen, und dadurch, dass die gemischten Trockenabfälle und Nassabfälle in der Verbrennungseinheit (6) auf ein bewegliches Gitter (7) zugeführt werden.

9. Verfahren nach Anspruch 8, **dadurch gekennzeichnet, dass** die gemischten Trockenabfälle und Nassabfälle durch eine Vorwärtsbewegung des beweglichen Gitters (7) entlang des beweglichen Gitters (7) befördert werden.

10. Verfahren nach Anspruch 9, **dadurch gekennzeichnet, dass** das bewegliche Gitter (7) mit einer stufenartigen Konfiguration bereitgestellt ist, die eine Anzahl von Gitterelementen (71) beinhaltet, und dadurch, dass eine Vorwärtsbewegung des beweglichen Gitters erreicht wird, indem eine bestimmte Anzahl der Gitterelemente (71) auf ein Vor- und Zurückbewegen in einer Längsrichtung des beweglichen Gitters (7) eingestellt werden.

11. Verfahren nach Anspruch 9 oder 10, **dadurch gekennzeichnet, dass** das bewegliche Gitter (7) mit einer stufenartigen Konfiguration bereitgestellt ist, die eine Anzahl von Gitterelementen (71) beinhaltet, und dadurch, dass Luft aus einer bestimmten Anzahl der Gitterelemente (71) in einer Längsrichtung des beweglichen Gitters (7) in die Mischabfälle eingeblasen wird.

## Revendications

1. Installation de traitement de déchets sur un navire, ladite installation (1) permettant de traiter des déchets secs ou des déchets humides, et ladite installation comprenant au moins une unité de réception de déchets (2, 3) comprenant une première unité de réception de déchets (2) pour déchets secs et une deuxième unité de réception de déchets (3) pour déchets humides, au moins un moyen de transport de déchets (4), et au moins une unité d'incinérateur (6) pourvue d'une entrée (61), **caractérisée en ce que** l'au moins un moyen de transport de déchets (4) comprend des double vis d'alimentation de déchets (41) conçues pour recevoir des déchets secs provenant de la première unité de réception de déchets (2) à l'aide d'une glissière à déchets secs (21) et des déchets humides provenant de la deuxième unité de réception de déchets (3) à l'aide d'une glissière à déchets humides (31), les double vis d'alimentation de déchets (41) étant configurées pour mélanger les déchets secs et les déchets humides, et **en ce que** les double vis d'alimentation de déchets (41) sont reliées à l'entrée (61) de l'unité d'incinérateur (6) pour introduire les déchets secs et les déchets humides mélangés par l'entrée (61) de l'unité d'incinérateur (6) et **en ce que** l'unité d'incinérateur (6) comprend une grille mobile (7) disposée à l'intérieur de l'unité d'incinérateur (6), après l'entrée (61) de l'unité d'incinérateur (6) et en aval des double vis d'alimentation de déchets (41).

2. Installation de traitement de déchets selon la revendication 1, **caractérisée en ce que** le moyen de transport de déchets (4) est pourvu d'une unité d'entraînement (43).

3. Installation de traitement de déchets selon la revendication 1 ou 2, **caractérisée en ce que** les double vis d'alimentation de déchets (41) du moyen de transport de déchets (4) sont pourvues d'ailettes (42).

4. Installation de traitement de déchets selon la revendication 1, **caractérisée en ce que** la grille mobile (7) présente une configuration du genre étagée, comprenant un certain nombre d'éléments de grille (71).

5. Installation de traitement de déchets selon la revendication 4, **caractérisée en ce qu'**un certain nombre d'éléments de grille (71) de la grille mobile (7) sont déplaçables vers l'arrière et vers l'avant dans une direction longitudinale de la grille mobile (7) .

6. Installation de traitement de déchets selon la revendication 4 ou 5, **caractérisée en ce qu'**un nombre donné des éléments de grille (71) de la grille mobile (70) sont pourvus de moyens soufflant de l'air dans une direction longitudinale de la grille mobile (7).

7. Installation de traitement de déchets selon la revendication 6, **caractérisée en ce que** les moyens soufflant de l'air se présentent sous la forme de buses (72) .

8. Procédé de traitement de déchets dans une installation de traitement de déchets sur un navire, dans lequel des déchets secs sont collectés dans une première unité de réception de déchets (2) pour déchets secs et des déchets humides sont collectés dans une deuxième unité de réception de déchets (3) pour déchets humides, après quoi des déchets sot introduits à l'aide d'une moyen de transport de déchets (4) dans au moins une unité d'incinérateur (6) pourvue d'une entrée (61), dans lequel des déchets secs provenant de la première unité de réception de déchets (2) sont amenés à l'aide d'une glissière à déchets secs (21) et des déchets humides provenant de la deuxième unité de réception de déchets (3) sont amenés à l'aide d'une glissière à déchets humides (31) sur le moyen de transport de déchets (4), **caractérisé en ce que** le moyen de transport de déchets comprend des double vis d'alimentation de déchets (41), dans lequel des déchets secs et des déchets humides sont mélangés à l'aide des double vis d'alimentation de déchets (41) pour introduire les déchets secs et les déchets humides mélangés par l'entrée (61) de l'unité d'incinérateur (6) à l'aide des double vis d'alimentation de déchets (41), et **en ce que** dans l'unité d'incinérateur (6), les déchets secs et les déchets humides mélangés sont amenés sur une grille mobile (7).

9. Procédé selon la revendication 8, **caractérisé en ce que** les déchets secs et les déchets humides mélangés sont transportés le long de la grille mobile (7) à l'aide d'un mouvement d'acheminement de la grille mobile (7).

10. Procédé selon la revendication 9, **caractérisé en ce que** la grille mobile (7) est pourvue d'une configuration du genre étagée comprenant un certain nombre d'éléments de grille (71), et **en ce que** le mouvement d'acheminement de la grille mobile est obtenu en déplaçant un nombre donné des éléments de grille (71) vers l'arrière et vers l'avant dans une direction longitudinale de la grille mobile (7).

11. Procédé selon la revendication 9 ou 10, **caractérisé en ce que** la grille mobile (7) est pourvue d'une configuration du genre étagée comprenant un certain nombre d'éléments de grille (71), et **en ce que** de l'air est soufflé dans les déchets mélangés à partir d'un nombre donné d'éléments de grille (71) dans une direction longitudinale de la grille mobile (7).
